Europäisches Patentamt

European Patent Office

Office européen des brevets

(11) Numéro de publication: **0 176 155**
**A1**

## (12) DEMANDE DE BREVET EUROPEEN

(21) Numéro de dépôt: **85201513.0**

(22) Date de dépôt: **20.09.85**

(51) Int. Cl.⁴: **G 01 S 7/52**
**G 10 K 11/32, G 10 K 11/34**

(30) Priorité: **25.09.84 FR 8414682**

(43) Date de publication de la demande:
**02.04.86 Bulletin 86/14**

(84) Etats contractants désignés:
**CH DE FR GB LI**

(71) Demandeur: **Laboratoires d'Electronique et de Physique Appliquée L.E.P.**
**3, Avenue Descartes**
**F-94450 Limeil-Brévannes(FR)**

(84) Etats contractants désignés:
**FR**

(71) Demandeur: **N.V. Philips' Gloeilampenfabrieken**
**Groenewoudseweg 1**
**NL-5621 BA Eindhoven(NL)**

(84) Etats contractants désignés:
**CH DE GB LI**

(72) Inventeur: **Coursant, Roger Henri**
**Société Civile S.P.I.D. 209 rue de l'Université**
**F-75007 Paris(FR)**

(74) Mandataire: **Landousy, Christian et al,**
**Société Civile S.P.I.D. 209, Rue de l'Université**
**F-75007 Paris(FR)**

(54) Appareil d'examen de milieux par échographie ultrasonore avec focalisation angulaire.

(57) Appareil d'examen de milieux par échographie ultrasonore comprenant un réseau focalisant de n transducteurs ultrasonores et dans lequel les transducteurs ultrasonores (a,b,c,...,i,...,n−1,n) sont réalisés en un matériau électrostrictif à polarisation non rémanente, et ladite polarisation est réalisée par un étage de polarisation comprenant : (1) une source (501) de p tensions continues de polarisation, (2) un circuit de démultiplexage et d'aiguillage (502) recevant d'une part les p tensions de polarisation et d'autre part des combinaisons de m bits sélectionnant lesdites tensions pour les fournir aux transducteurs, (3) un circuit de détermination de loi de sensibilité (503), composé d'un compteur (522), dont le nombre d'états correspond au moins au nombre de directions à explorer, et d'une mémoire (521), destinée à fournir les n combinaisons numériques respectives correspondant à chaque état du compteur, et (4) un séquenceur (520).

./...

Croydon Printing Company Ltd.

FIG.3

2 -III-PHF 84-577

## APPAREIL D'EXAMEN DE MILIEUX PAR ECHOGRAPHIE ULTRASONORE AVEC FOCALISATION ANGULAIRE

La présente invention concerne un appareil d'examen de milieux par échographie ultrasonore comprenant un réseau focalisant de n transducteurs ultrasonores associé à un étage d'émission pour l'émission répétée d'ondes ultrasonores vers la région à explorer et à un étage de réception pour le traitement des échos reçus en retour. Un tel appareil peut être utilisé par exemple dans le domaine médical pour l'examen de tissus biologiques.

Le brevet des Etats-Unis d'Amérique N° 2875355 décrit un transducteur ultrasonore focalisant qui, pour permettre ladite focalisation, est composé de zones adjacentes polarisées de façon opposée. Les dimensions des zones sont choisies de façon que la succession des polarisations de signe opposé permette effectivement, selon le principe des réseaux zonés de Fresnel, un décalage moyen d'une demi-longueur d'onde entre les trajets ultrasonores à partir de deux zones successives. La focalisation ainsi obtenue est de type sphérique ou cylindrique.

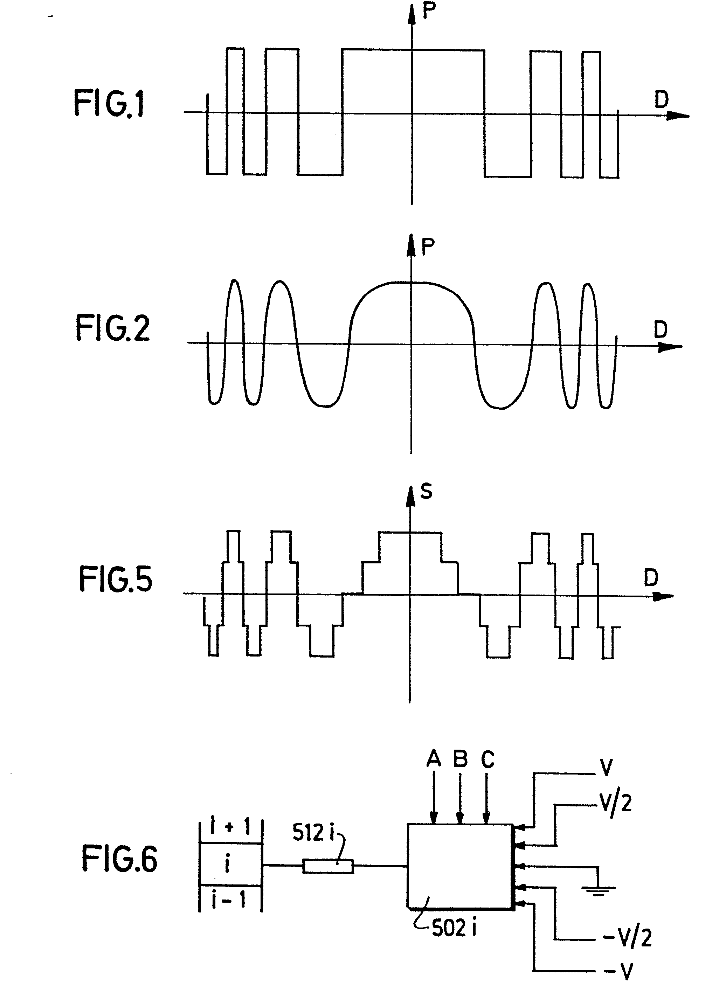

La loi de phase correspondant à ce mode de polarisation est représentée sur la figure 1 de la présente demande. Cependant l'instauration d'une telle loi de phase ne permet qu'une focalisation relativement approximative puisque le décalage d'une demi-longueur d'onde n'est en réalité nécessaire qu'entre les positions centrales de deux zones successives de polarité opposée, les décalages entre les points situés entre ces positions centrales devant être inférieurs et varier de façon continue entre la valeur zéro et une demi-longueur d'onde. Or, puisque toute une zone présente la même polarisation de signe donné et toute la zone adjacente la même polarisation de signe contraire, cette condition de progressivité des décalages n'est pas vérifiée.

Cet inconvénient se manifeste de façon encore plus marquée lorsqu'on veut opérer une focalisation oblique. En effet, il est géométriquement évident que, plus l'obliquité du faisceau de focalisation est prononcée par rapport à la normale au plan du ou des transducteurs utilisés, plus les conditions réelles de focalisation s'écartent de la focalisation optimale obtenue lorsque la condition de progressivité est vérifiée.

Le but de l'invention est de proposer un appareil d'examen de milieux remédiant à cet inconvénient.

A cet effet, l'appareil selon l'invention est caractérisé en ce que :

(A) les transducteurs ultrasonores sont réalisés en un matériau électrostrictif à polarisation non rémanente ;

(B) ladite polarisation est réalisée par l'intermédiaire d'un étage de polarisation composé des circuits suivants :

(1) une source de p tensions continues de polarisation ;

(2) un circuit de démultiplexage et d'aiguillage, composé de n démultiplexeurs recevant chacun d'une part les p tensions continues de polarisation et d'autre part une combinaison de m bits sélectionnant l'une desdites tensions, et fournissant par l'intermédiaire d'une résistance de polarisation en série ladite tension sélectionnée au transducteur ultrasonore associé respectivement à ce démultiplexeur ;

(3) un circuit de détermination d'une loi de sensibilité correspondant à deux états de phase et à p/2 ou (p + 1)/2 états d'amplitude selon que p est respectivement pair ou impair, ledit circuit étant composé d'un compteur, dont le nombre d'états correspond au moins au nombre de directions différentes danslesquelles on veut opérer un examen avec focalisation des ondes ultrasonores, et d'une mémoire, destinée à fournir aux n démultiplexeurs, en réponse à un état quelconque du compteur, n combinaisons numériques respectives correspondant audit état et indiquant à chaque démultiplexeur celle des tensions continues qu'il doit sélectionner pour la polarisation du transducteur qui lui est associé ;

(4) un séquenceur comprenant essentiellement un circuit d'horloge destiné à fixer la durée des périodes d'émission et de réception et le rythme de changement d'état du compteur.

Dans l'appareil ainsi proposé, l'utilisation de transducteurs en matériau électrostrictif et la polarisation de ceux-ci à l'aide d'un étage de polarisation de structure originale permettent de réaliser une focalisation oblique très précise. En effet, la loi de phase théorique à laquelle correspondrait l'obtention exacte de réseaux zonés de Fresnel, c'est-à-dire une focalisation parfaite avec l'exacte progressivité nécessaire des décalages entre transducteurs successifs, est représentée sur la figure 2. L'utilisation de l'étage de polarisation selon l'invention permet alors d'imposer à chaque transducteur du réseau, dans chacun de ses deux états possibles de polarité opposée, une loi de variation discrète d'amplitude permettant de réduire effectivement l'inconvénient mentionné plus haut de la focalisation approximative à deux états de phase. Plus précisément, la focalisation ainsi obtenue est d'autant plus voisine de celle qui est théoriquement nécessaire que le nombre p de tensions continues de polarisations, positives ou négatives, fournies par la source de tensions continues pour obtenir ces différentes amplitudes est plus élevé.

Les particularités et avantages de l'invention apparaîtront maintenant de façon plus détaillée dans la description qui suit et dans les dessins annexés, donnés à titre d'exemples non limitatifs et dans lesquels :

- les figures 1 et 2 sont des courbes $P = f(D)$ où P représente la phase et D la distance considérée à partir de la partie centrale du réseau de transducteurs, montrant respectivement une loi de phase simplifiée qui permet une obtention approximative de réseaux zonés de Fresnel à l'aide d'un réseau de transducteurs à deux états de polarisation, et la loi de phase théorique qui en permet l'obtention exacte ;

- la figure 3 montre un exemple de réalisation de l'appareil selon l'invention ;

- les figures 4a à 4d sont des diagrammes temporels montrant respectivement l'allure du signal périodique (tension électrique) définissant la cadence des cycles d'émission-réception, l'allure du signal périodique retardé réellement fourni au générateur d'excitation électrique des transducteurs, l'allure du signal périodique fixant la durée de l'émission dans le cycle d'émission-réception, et l'allure de la tension électrique aux bornes de l'un des transducteurs ultrasonores dans le cas d'un changement de polarité à l'instant dit $t_3$ ;

- la figure 5 montre l'allure de la loi de sensibilité S qui peut être obtenue si l'on dispose de cinq tensions continues de polarisation possibles, et qui permet l'obtention d'une loi de phase à deux états et d'une loi d'amplitude à trois états ;

- la figure 6 montre un exemple de démultiplexeur dans ce cas d'une loi de sensibilité à cinq états de polarisation possibles.

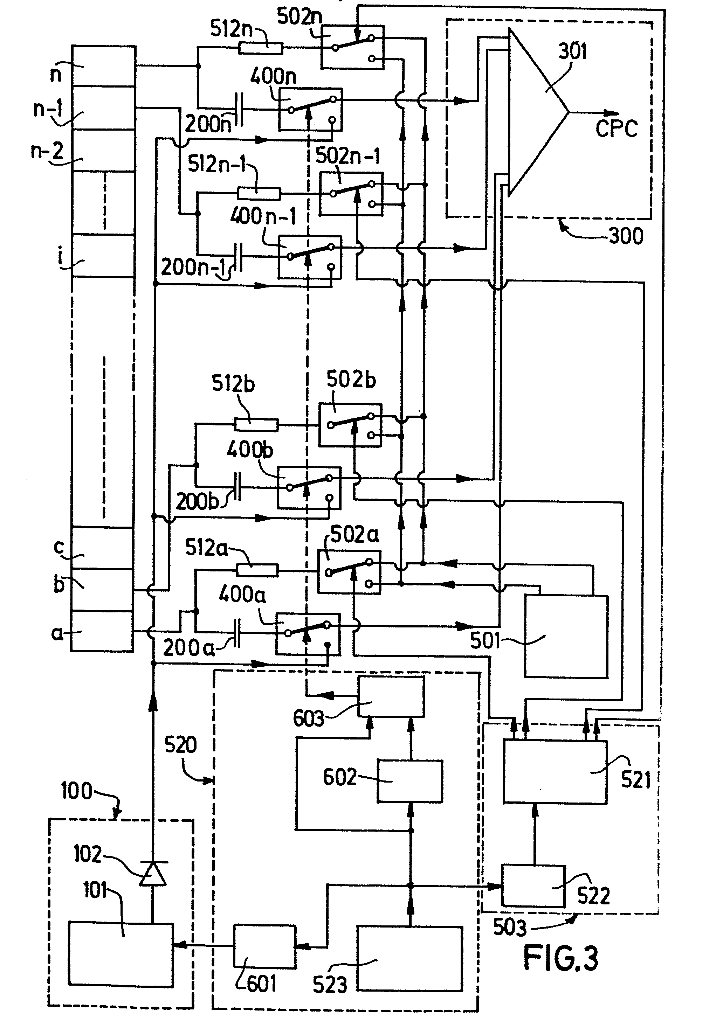

L'appareil selon l'invention comprend, en référence à la figure 3, tout d'abord un réseau de n transducteurs ultrasonores a, b, c,...,i,..., n-1, n, par exemple 32 ou 64. Ces transducteurs sont disposés sous la forme d'une barrette linéaire d'éléments transducteurs parallélépipédiques et réalisés en un matériau électrostrictif à polarisation (ferroélectrique) non rémanente (c'est-à-dire un matériau dont la sensibilité de transduction est directement liée à la valeur de tension de polarisation qui lui est appliquée et s'annule en même temps que celle-ci). Ils peuvent être par exemple des céramiques dopées de niobate de plomb et de magnésium telles que celles décrites dans l'article de S.J. Jang et al., IEEE Ferroelectrics Symposium, Vol.27, 1980, pp.31-34.

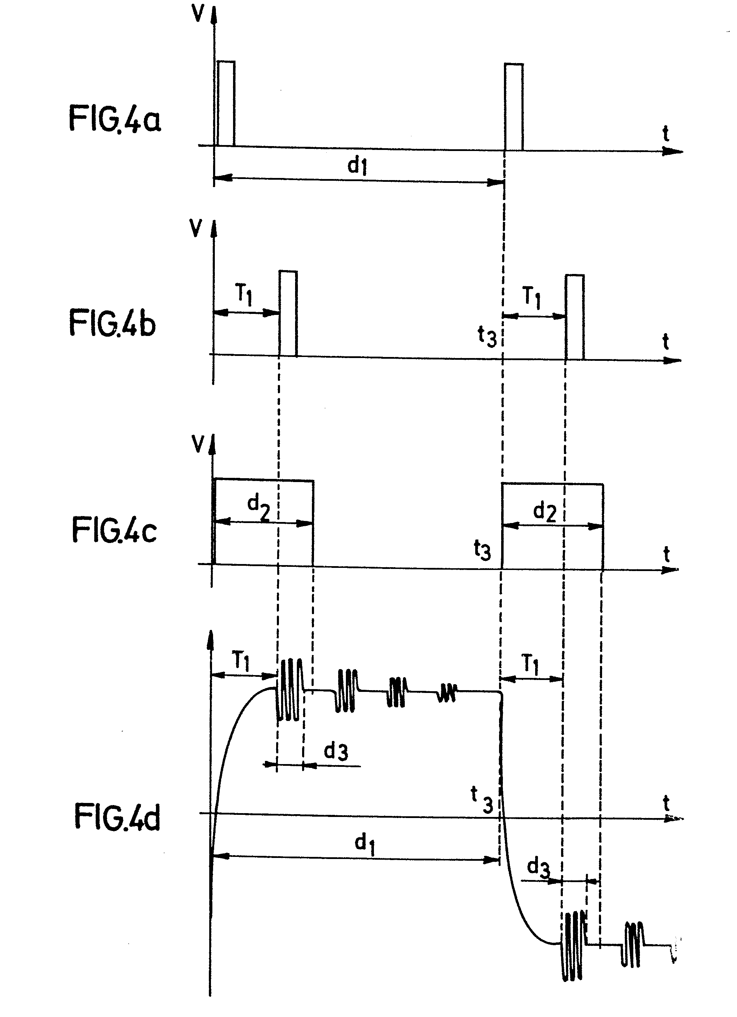

L'appareil comprend également un étage d'émission 100, composé d'un générateur d'excitation électrique 101 et d'une diode 102 en série avec celui-ci pour placer ledit étage d'émission sous haute impédance par rapport aux éléments transducteurs, n condensateurs 200a à 200n en parallèle interposés entre la sortie de l'étage d'émission et chacun des n transducteurs, et un étage de réception 300. Cet étage 300 est composé d'un sommateur 301 recevant les n signaux de réception délivrés par les n transducteurs et d'un circuit classique de traitement CPC de signal échographique, ce dernier comprenant lui-même par exemple un amplificateur, un circuit de contrôle automatique de gain, et un dispositif de mémorisation et/ou de visualisation. Des commutateurs 400a à 400n placés entre la sortie de l'étage d'émission 100, les condensateurs 200a à 200n et les n entrées du sommateur 301 de l'étage de réception, permettent la séparation des étages d'émission et de réception. Ces commutateurs basculent au rythme du signal périodique de la figure 4c décrite ci-après, et évitent notamment l'aveuglement de l'étage de réception par l'étage d'émission.

L'appareil comprend enfin un étage de polarisation composé d'une source de tensions de polarisation 501, d'un circuit de démultiplexage et d'aiguillage 502, d'un circuit de détermination de la loi de sensibilité 503, et d'un séquenceur 520. La source 501 de tensions de polarisation est capable de délivrer p tensions continues de polarisations distinctes, positives ou négatives, correspondant aux p états possibles de polarisation que l'on veut imposer aux n transducteurs électrostrictifs. Dans la description qui suit, par souci de simplification des figures, on supposera, pour l'exemple principalement décrit, qu'il y a seulement deux états possibles de polarisation, correspondant par exemple à deux tensions de polarisation de +500 volts de de -500 volts, mais l'invention s'applique de façon identique lorsqu'on impose aux n transducteurs une loi de sensibilité à p états, pour permettre une focalisation plus précise comme on l'a vu plus haut.

Le circuit de démultiplexage et d'aiguillage 502 comprend n démultiplexeurs 502a à 502n. Ces démultiplexeurs reçoivent chacun d'une part les p tensions de polarisation possibles (dans l'exemple ici décrit, p = 2, et les démultiplexeurs se réduisent alors à de simples commutateurs) fournies par la source 501, et d'autre part une combinaison de m bits fixant pour le transducteur électrostrictif concerné celle des p tensions continues de polarisation qu'il va recevoir et fixant aussi, par conséquent, la sensibilité de ce transducteur. Si p = 2, il suffit que m = 1 pour exprimer deux états possibles ; si p = 3 ou p = 4, m = 2 permet d'exprimer les trois, ou quatre, états correspondants, et ainsi de suite. Le circuit de démultiplexage et d'aiguillage 502 prévoit en sortie des n démultiplexeurs 502a à 502n un nombre égal de résistances 512a à 512n à l'entrée des n branches menant aux n transducteurs. Dans l'exemple décrit, la valeur de ces n résistances de polarisation a été choisie égale à 1000 ohms environ.

Le circuit 503 de détermination de la loi de sensibilité permet de fixer l'obliquité du faisceau de focalisation et la combinaison de m bits sélectionnant la tension de polarisation imposée distinctement à chacun de ces transducteurs. La loi de sensibilité correspond à deux états de phase et à p/2 états d'amplitude quand p est pair ou à (p+1)/2 états d'amplitude quand p est impair (dans le cas de la figure 5, p = 5, et l'on a trois états d'amplitude possibles). La combinaison numérique de m bits associée à la loi de sensibilité correspondant à l'obliquité recherchée est délivrée par une mémoire 521, par exemple de type ROM ou PROM, préalablement chargée avec les valeurs correspondant à la meilleure expression possible de ladite loi de sensibilité compte tenu du nombre de tensions de polarisation distinctes fournies par la source 501. Cette mémoire est reliée à un compteur 522 dont le nombre d'états est le nombre d'obliquités différentes voulu, par exemple 128, et dont l'entrée est à son tour commandée par un circuit d'horloge 523, délivrant le signal représenté sur la figure 4a : la période $d_1$ du signal périodique ainsi délivré correspond à la durée d'un cycle d'émission-réception ultrasonore pour une obliquité déterminée.

Le circuit d'horloge 523 fait partie du séquenceur 520 et commande non seulement le compteur 522 mais aussi, dans le séquenceur, des circuits à retard 601 et 602. Le circuit à retard 601, placé entre le circuit d'horloge 523 et le générateur d'excitation électrique 101 apporte au signal de la figure 4a un retard $T_1$ (voir sur la figure 4b le nouveau signal ainsi engendré) qui correspond au temps de récupération nécessaire pour déclencher l'émission d'ondes ultrasonores lorsque la polarisation des transducteurs est effective. Le circuit à retard 602 fixe la durée $d_2$ de fonctionnement en mode émetteur. L'impulsion de durée correspondante, représentée sur la figure 4c, et de période de répétition égale à celle des impulsions de durée $d_1$ de la figure 4a (par exemple 1 milliseconde dans l'exemple considéré) est délivrée par une bascule bistable 603. Les entrées de cette bascule sont l'une reliée directement à la sortie du circuit d'horloge 523, par exemple pour la venue au niveau supérieur de l'impulsion, et l'autre reliée à cette même sortie mais par l'intermédiaire du circuit à retard 602 pour le basculement inverse (le retour au niveau inférieur de l'impulsion dans l'exemple considéré). C'est ce signal périodique de la figure 4c qui est envoyé vers les commutateurs 400a à 400n insérés entre les étages d'émission et de réception 100 et 300, afin d'assurer la commande automatique du fonctionnement de l'appareil d'examen en mode d'émission ou en mode de réception.

La figure 4d montre l'allure de la tension électrique aux bornes d'un transducteur, dans le cas d'une loi de sensibilité à deux états concrétisée par l'existence de deux tensions de polarisation possibles. On a mis en évidence sur cette figure 4d le temps de retard $T_1$, correspondant au temps de récupération nécessaire avant le déclenchement effectif de l'émission d'ondes ultrasonores, la durée $d_1$ d'un cycle d'émission-réception, et la durée $d_2$ du fonctionnement en mode émetteur, et on a fait apparaître sur le signal électrique d'excitation des échos en provenance de la structure examinée.

Bien entendu, la présente invention n'est pas limitée à l'exemple de réalisation décrit et représenté à partir duquel des variantes peuvent être proposées sans pour cela sortir du cadre de l'invention. En particulier, on a vu que l'invention, décrite par souci de simplification pour une loi de sensibilité à deux états, était applicable dans le cas tout à fait général d'une loi à p états, et cette application va être brièvement présentée ci-dessous.

La loi de phase théorique à laquelle correspondrait une focalisation parfaite a été représentée sur la figure 2 et sa traduction analytique est donnée par l'expression $y = \cos \alpha x^2$ où $\alpha = \pi/(\lambda.f)$ ( $\lambda$ étant la longueur d'onde associée à la fréquence des ondes ultrasonores engendrées, c'est-à-dire à la fréquence de travail des transducteurs, et f étant la distance focale). Une loi de phase à deux états en constitue une approximation d'autant meilleure que la loi d'amplitude qui lui est associée compte plus de niveaux de quantification, et permet donc de réduire d'autant mieux l'effet des foyers harmoniques. Si l'on choisit par exemple p = 5, c'est-à-dire cinq niveaux de sensibilité grâce à une loi de phase à deux états et à une loi d'amplitude à trois états, cette loi de sensibilité est représentée par la courbe de la figure 5.

Les circuits de l'étage de réception sont alors un peu plus complexes que dans l'exemple précédemment décrit. D'une part, la source de tensions de polarisation 501 doit maintenant délivrer quatre tensions continues V, V/2, -V/2, -V, la tension nulle à laquelle correspond le cinquième niveau

0176155
PHF84/577EP

de sensibilité et donc le cinquième état de polarisation étant obtenue par simple mise à la masse. D'autre part, le mot mémoire correspondant à un état quelconque de polarisation et transmis de la mémoire 521 à l'un quelconque 502i des démultiplexeurs est plus long, ce qui implique une capacité mémoire plus importante. On pourra pour cinq états choisir par exemple des mots de 3 bits : 000 pour V, 001 pour V/2, 010 pour 0 volt, 011 pour -V/2, 100 pour -V. Les n mots adressés respectivement à chacun des n démultiplexeurs 502a à 502n du circuit de démultiplexage et d'aiguillage 502 sont choisis parmi ces cinq expressions, et le triplet binaire ABC constituant ces mots est adressé à chaque démultiplexeur selon le schéma de la figure 6.

On notera aussi le fait suivant, à savoir que, plus l'obliquité du faisceau de focalisation est prononcée, plus les ondes ultrasonores émises par deux transducteurs distincts du réseau arrivent décalées dans le temps l'une par rapport à l'autre en un point de focalisation quelconque situé sur le trajet du faisceau. Il en résulte que, pendant toute demi-période $d_1$ où la tension observée sur la figure 4d correspond à un même état déterminé de polarisation, le signal d'excitation monochromatique (ou quasi-monochromatique) émis doit l'être pendant une durée $d_3$ suffisante pour que le signal émis par le transducteur le plus proche du point de focalisation et donc arrivé le premier en ce point soit encore présent en ce même point lorsqu'arrive à son tour le signal émis par le transducteur le plus éloigné. L'existence de la focalisation est à cette condition.

REVENDICATION :

1.      Appareil d'examen de milieux par échographie ultrasonore comprenant un réseau focalisant de n transducteurs
ultrasonores associé à un étage d'émission (100) pour l'émission répétée d'ondes ultrasonores vers la région à explorer et
à un étage de réception (300) pour le traitement des échos reçus en retour, caractérisé en ce que :

(A) les transducteurs ultrasonores sont réalisés
en un matériau électrostrictif à polarisation non rémanente ;

(B) ladite polarisation est réalisée par l'intermédiaire d'un étage de polarisation composé des circuits suivants :

(1) une source (501) de p tensions continues
de polarisation ;

(2) un circuit (502) de démultiplexage et
d'aiguillage composé de n démultiplexeurs (502a) à (502n) recevant chacun d'une part les p tensions continues de polarisation et d'autre part une combinaison de m bits sélectionnant
l'une desdites tensions et fournissant par l'intermédiaire
d'une résistance de polarisation en série (512a) à (512n) ladite tension sélectionnée au transducteur ultrasonore associé
respectivement à ce démultiplexeur ;

(3) un circuit (503) de détermination d'une
loi de sensibilité correspondant à deux états de phase et à
p/2 ou (p+1)/2 états d'amplitude selon que p est respectivement pair ou impair, ledit circuit étant composé d'un compteur
(522), dont le nombre d'états correspond au moins au nombre de
directions différentes dans lesquelles on veut opérer un examen avec focalisation des ondes ultrasonores, et d'une mémoire
(521), destinée à fournir aux n démultiplexeurs, en réponse à
un état quelconque du compteur, n combinaisons numériques respectives correspondant audit état et indiquant à chaque démultiplexeur celle des tensions continues qu'il doit sélectionner
pour la polarisation du transducteur qui lui est associé ;

(4) un séquenceur, comprenant essentiellement

0176155

PHF 84/577EP

un circuit d'horloge destiné à fixer la durée des périodes d'émission et de réception et le rythme de changement d'état du compteur.

0176155

FIG.1

FIG.2

FIG.5

FIG.6

512 i

502 i

A B C

V

V/2

−V/2

−V

1−Ⅲ−PHF 84− 577

FIG.3

0176155

FIG.4a

FIG.4b

FIG.4c

FIG.4d

Office européen
des brevets

**RAPPORT DE RECHERCHE EUROPEENNE**

0176155

Numéro de la demande

EP 85 20 1513

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| Y | US-A-4 228 686 (TANCRELL) <br> * Résumé; colonne 13, ligne 4 - colonne 14, ligne 22; revendications * | 1 | G 01 S 7/52 <br> G 10 K 11/32 <br> G 10 K 11/34 |
| | --- | | |
| Y,D | FERROELECTRICS, vol. 27, 1980, pages 31-34, Gordon and Breach Science Publishers Inc., US; S.J. JANG et al.: "Electrostrictive behavior of lead magnesium niobate based ceramic dielectrics" <br> * Résumé: deuxième phrase" * | 1 | |
| | --- | | |
| A | 1979 ULTRASONICS SYMPOSIUM PROCEEDINGS, 26 -28 septembre 1979, pages 204-209, New Orleans, LA, IEEE, New York, US; M. FINK et al.: "Wideband Fresnel focusing array response" <br> * Page 208: colonne de gauche, ligne 15 - colonne de droite, ligne 5 * | 1 | |
| | | | **DOMAINES TECHNIQUES RECHERCHES (Int Cl 4)** <br><br> G 10 K <br> G 01 S |
| | --- | | |
| A | ACOUSTICAL IMAGING, vol. 13, 26-28 octobre 1983, pages 345-355, Plenum Press, US; M. MORTEZAIE et al.: "Fresnel zone plate and Fresnel phase plate patterns for acoustic transducers" <br> * En entier * | 1 | |
| | ---     -/- | | |

Le présent rapport de recherche a été établi pour toutes les revendications

| Lieu de la recherche <br> LA HAYE | Date d'achèvement de la recherche <br> 09-12-1985 | Examinateur <br> OLDROYD D.L. |
|---|---|---|

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | EP-A-0 027 542 (TORAY INDUSTRIES) | | |
| A | US-A-4 129 799 (GREEN) | | |
| A | FR-A-2 373 056 (LEP) | | |

DOMAINES TECHNIQUES RECHERCHES (Int Cl.4)

Le présent rapport de recherche a été établi pour toutes les revendications

| Lieu de la recherche | Date d'achèvement de la recherche | Examinateur |
|---|---|---|
| LA HAYE | 09-12-1985 | OLDROYD D.L. |